# EUROPÄISCHE PATENTSCHRIFT

(11) **EP 1 697 159 B1**
(45) Veröffentlichungstag und Bekanntmachung des Hinweises auf die Patenterteilung: **20.08.2008**
(21) Anmeldenummer: 04762464.8
(22) Anmeldetag: 22.07.2004
(51) Int. Cl.: B60N 2/00, H01R 13/631

(54) **VERBINDUNGSELEMENT**
CONNECTING ELEMENT
ELEMENT DE LIAISON

(30) Priorität: 21.11.2003 DE 10354585
(43) Veröffentlichungstag der Anmeldung: 06.09.2006
(73) Patentinhaber: ROBERT BOSCH GMBH, 70442 Stuttgart (DE)
(72) Erfinder: KURLE, Juergen, 72766 Reutlingen (DE); WOERNLE, Wolfgang, 72149 Neustetten (DE); WEHRMANN, Johann, 72336 Balingen (DE); KLETT, Gustav, 72144 Dusslingen (DE); SCHUERER, Martin, 73760 Ostfilden (DE); KUNERT, Peter, 72805 Lichtenstein (DE)
(86) Internationale Anmeldenummer: PCT/DE2004/001614
(87) Internationale Veröffentlichungsnummer: WO 2005/051702

(56) Entgegenhaltungen:
- DE-A- 10 111 020
- DE-A- 10 216 723
- DE-C- 4 331 280
- US-A- 4 553 192

## Beschreibung

### Stand der Technik

Die Erfindung geht aus von einem Verbindungselement nach der Gattung des unabhängigen Patentanspruchs.

Aus DE 101 11 020 A1 ist bereits ein Verbindungselement bekannt, das zur Kraftmessung, vorzugsweise in einem Fahrzeugsitz, konfiguriert ist, in dem die Verschiebung zwischen einem Hallsensor und einem Magneten, die durch Krafteinleitung provoziert ist, als Maß für die Kraft gemessen wird.

Aus US 4,553,192 ist ein Verbindungssystem bekannt, bei dem eine Federkontaktierung derart verwendet wird, dass, wenn ein Modul in ein Gehäuse eingebaut wird, Lötkontakte zwischen den Federkontakten und einer Leiterplatte nur kompressiv belastet werden, aber nicht einer Spannung oder Scherkräften ausgesetzt werden. Aus DE 102 16 723 A1 ist ein Kraftmesser, insbesondere zur Sitzgewichtsbestimmung in einem Fahrzeug, bekannt. Dabei sind ein Permanentmagnet und ein Sensor vorgesehen, wobei zumindest der Permanentmagnet von einem ferromagnetischen Material umgeben ist. Der Abstand des Permanentmagneten zum ferromagnetischen Material ändert sich bei einer Beaufschlagung des Lagerkörpers durch eine Kraft. Diese Änderung des Abstands bewirkt eine Änderung der Feldstärke des Permanentmagneten, welche mittels des Sensors erfasst und in ein entsprechendes Signal umgewandelt wird. Durch die starre Anordnung von Permanentmagnet und Sensor zueinander lässt sich eine besonders einfache Montage und Justierung des Kraftmessers verwirklichen.

### Vorteile der Erfindung.

Das erfindungsgemäße Verbindungselement mit den Merkmalen des unabhängigen Patentanspruchs hat demgegenüber den Vorteil, dass eine Bewegung oder Verschiebung des Messelements, beispielsweise eines Hallsensors oder dessen Halterung, durch äußere Kräfte, die nicht gemessen werden sollen, also insbesondere solche, die durch die Signalabgabemittel eingeleitet werden könnten, vermieden werden. Dies vermeidet entsprechende Fehlinterpretationen bzw. Messungen. Folglich werden vorteilhafter Weise die Kräfte, die beispielsweise über eine Stecker oder Kabelbaum über das Gehäuse zum Messelement führen könnten, entkoppelt.

Erfindungsgemäß ist, dass die Signalabgabemittel, die zur Abgabe des Signals vom Messelement dienen, eine Federkontaktierung zur Entkopplung der Kräfte aufweisen. Dann wird es sich um eine leitungsgebundene Übertragung des Mess-Signals handeln, wobei durch die Federkontaktierung von außen wirkende Kräfte gepuffert werden können. Damit wird das Messelement bzw. dessen Halterung durch eine über die Leitungen wirkende Kraft nicht beeinflusst. Erfindungsgemäß ist das Gehäuse dabei zweiteilig aufgebaut, wobei der erste Teil das Messelement in einer Hülse und auch eine Kontaktfläche aufweist, die mit dem Messelement verbunden ist, wobei auf der Kontaktfläche dann die Federkontaktierung realisiert wird. Der zweite Teil weist im übrigen auch Stecker für elektrische Leitungen oder einen Kabelbaum auf, so dass das Verbindungselement als Sensor seine Daten an die Außenwelt übertragen kann.

Weiterhin ist zwischen dem ersten und zweiten Teil, die auf verschiedene Weise befestigt werden können, beispielsweise durch Schweißen, eine Dichtung vorgesehen. Darüber hinaus ermöglicht die zweiteilige Ausführung des Gehäuses, dass ein Deckel zum Verschließen der Elektronik im zweiten Teil des Gehäuses entfallen kann. Diese Elektronik wird vorzugsweise zur Signalaufbereitung verwendet.

Durch die in demabhängigen Anspruch aufgeführte Maßnahme und Weiterbildung sind vorteilhafte Verbesserungen des im unabhängigen Patentanspruch angegebenen Verbindungselements möglich.

Alternativ ist es vorteilhaft, dass die Signalabgabemittel eine drahtlose Signalübertragung zur Entkopplung aufweisen. Dabei kann beispielsweise zwischen dem ersten und zweiten Teil eine Vorrichtung zur optischen Übertragung vorgesehen sein, oder auch eine Mikrowellenübertragung, wobei diese sogar in dem ersten Teil, der das Messelement, also den Hallsensor, aufweist, passiv ausgeführt werden kann. Dies wird beispielsweise dadurch realisiert, dass Mikrowellenstrahlung auf den ersten Teil gegeben wird und dieser erste Teil aus der Mikrowellenstrahlung die notwendige Energie zur Messung und zur Übertragung der Messwerte entnimmt.

Schließlich kann die Federkontaktierung auch auf der Kontaktfläche auf einer Leiterplatte realisiert sein. Alternativ ist es möglich, dass die Kontaktfläche, die beispielsweise mehrere Kontaktzonen umfasst, direkt im Gehäuse an entsprechenden Stellen der Einlegeteile befestigt sein kann. Diese Befestigung kann durch Löten oder Schweißen realisiert sein.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild des Verbindungselements,
- Figur 2: eine erste perspektivische Ansicht des Verbindungselements,
- Figur 3: eine zweite perspektivische Ansicht des Verbindungselements und
- Figur 4: eine schematische Querschnittsdarstellung des Verbindungselements.

### Beschreibung

Ein Sitzkraftsensor kann als Verbindungselement realisiert sein. Solche Verbindungselemente werden dann an der Halterung für Fahrzeugsitze derart befestigt, dass sie zur Messung des Gewichts, das auf dem Sitz lastet, geeignet sind. Der Einbau wird dabei so realisiert, dass das Verbindungselement andere Verbindungselemente, wie einen Bolzen oder eine Schraube, ersetzen kann. Damit wird die Bauhöhe des Fahrzeugsitzes nicht erhöht. Als besonders geeignet hat es sich erwiesen, dass ein solcher Sitzkraftsensor die Linearverschiebung zwischen einem Magneten und einen Hallsensor misst. Dies ermöglicht sehr präzise Messungen.

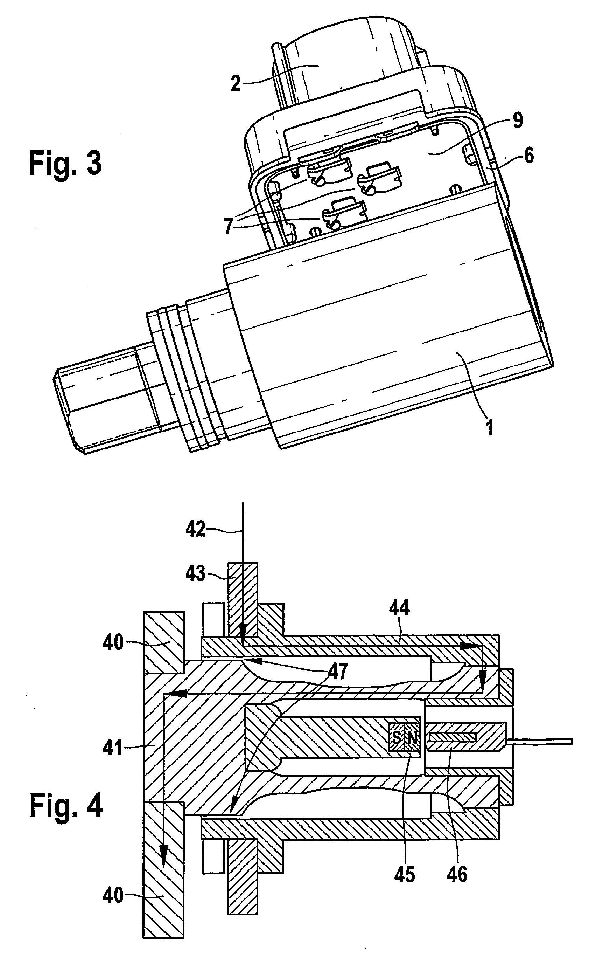

Figur 4 erläutert, wie ein erfindungsgemäßes Verbindungselement funktionieren kann. Das Verbindungselement 41 ist fest an einer Halterung 40 eingebaut, die am Chassis des Fahrzeugs montiert ist. Am anderen Ende ist das Verbindungselement 41 mit dem Sitz, der hier durch die Aufnahme 43 angedeutet ist, verbunden. Daher erhält über die Aufnahme 43 das Verbindungselement 41 die auf den Sitz ausgeübte Gewichtskraft 42. Die Gewichtskraft 42 wird durch die Hülse 44 in den Körper des Verbindungselements 41 eingeleitet, um dann über die Halterung 40 abgeleitet zu werden. Diese Kraft führt zu einer Verschiebung zwischen dem Biegebalken 45 und dem Hallsensor 46, der im Gehäuse des Verbindungselements 41 gelagert ist. Aus dieser Verschiebung ist das Gewicht, das auf dem Sitz lastet, bestimmbar. Als Überlastschutz sind Luftspalte 47 vorgesehen.

Der Sitzkraftsensor besteht also aus einem inneren Biegeelement und einer äußeren Hülse, die an einem Ende dicht und fest verschweißt ist. Diese Verschweißung findet also mit der Halterung 40 statt. Dieser Zusammenbau ist das aktive Element des Sensors. Innerhalb des Sensors wird die Verschiebung durch Krafteinwirkung durch einen Hallsensor aufgenommen. Das Signal des Hallsensors 46 soll einem am Umfang des Bolzens angebrachten Gehäuse zugeführt werden, wo die Signalaufbereitung auf einer Leiterplatte stattfindet. Das aufbereitete Signal wird dann einer Steckerschnittstelle zugeführt. An dieser wird das Signal per Gegenstecker und Kabelbaum im Fahrzeug dem Steuergerät zur Ansteuerung von Personenschutzmitteln zugeführt. Da die Kraft in eine lineare Verschiebung umgesetzt wird und der Hallsensor 46 diese Verschiebung in ein Signal umsetzt, ist jede Bewegung bzw. Verschiebung des Hallsensors 46 bzw. dessen Haltevorrichtung durch äußere Krafteinflüsse zu vermeiden, da dies zu einer Fehlinterpretation bzw. -messung führen würde.

Erfindungsgemäß wird daher vorgeschlagen, das Verbindungselement derart zu konfigurieren, dass durch die Signalabgabemittel eine Entkopplung der Kräfte, die beispielsweise vom Stecker oder Kabelbaum über das Gehäuse zum Hallsensor wirken könnten, erreicht wird. Vorzugsweise wird dies durch eine Federkontaktierung erreicht. Es ist jedoch auch eine drahtlose Übertragung des Signals des Messelements möglich. Die Federkontaktierung ist idealer Weise mit einem zweiteiligen Aufbau des Gehäuses und des IC-Halters gekoppelt. Weiterhin ist es von Vorteil, dass die Montage des Gehäuses auf dem Umfang des Bolzens mittels im Gehäuse eingespritzter Bleche und Abdichtungen des Gehäuses durch eine umlaufende Dichtung am Gehäuse direkt auf dem Bolzen erreicht wird. Durch diese Überkopfmontage des Gehäuses entfällt ein zusätzlich notwendiger Deckel zum nachträglichen Verschließen der Elektronik für die Signalaufbereitung.

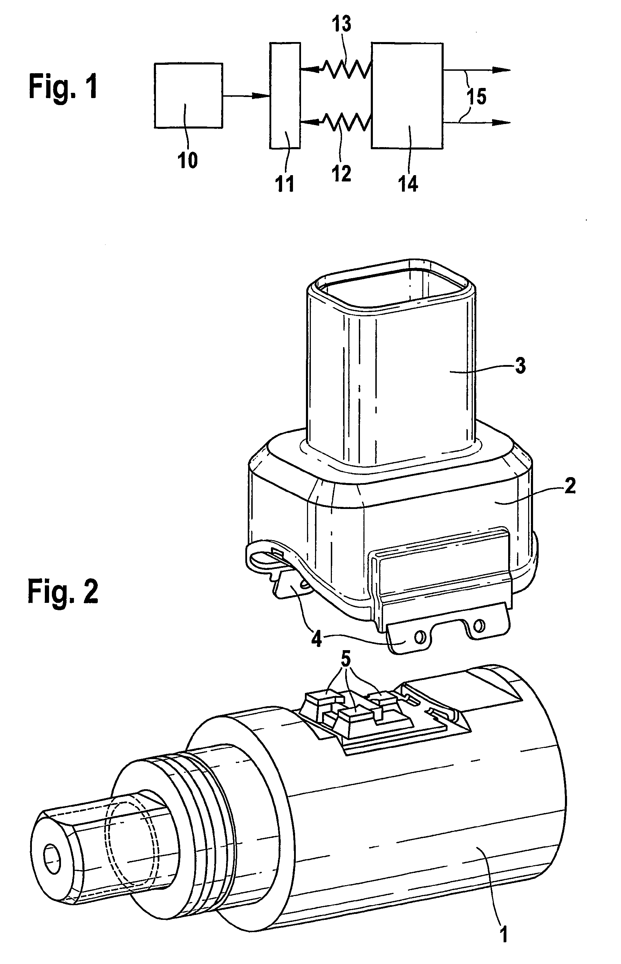

Figur 1 zeigt in einem Blockschaltbild das erfindungsgemäße Verbindungselement. Ein Messelement 10, hier ein Hallsensor, ist über eine Kontaktfläche 11 mit hier zwei Kontaktzonen an die Signalabgabemittel 13 und 12 angeschlossen. Diese Signalabgabemittel 12, 13 sind hier als Kontaktfedern realisiert. D.h. die Federn drücken auf die Kontaktzonen auf der Kontaktfläche 11 und können so Kräfte, die über die Anschlussleitungen kommen, abfedern. Die Kontaktfedern 12 und 13 sind an eine Signalaufbereitung 14 für die Sensorsignale angeschlossen. Es ist möglich, dass mehr als diese beiden Kontaktfedern 12 und 13 vorgesehen sind. Die Elektronik 14 weist Leitungen 15 auf, die zum Airbagsteuergerät führen.

Figur 2 zeigt eine erste perspektivische Darstellung des erfindungsgemäßen Verbindungselements. Das Verbindungselement weist ein Federelement 1 mit Hülse aus Stahl auf. Dabei ist eine Ausnehmung vorgesehen, in der sich die Kontaktzonen 5 befinden. Die Kontaktzonen 5 stellen den elektrischen Kontakt zum Messelement 10 her. Auf das Verbindungselement 1 wird ein Gehäuse 2 aufgesetzt. Dieses Gehäuse 2 weist einen Stecker 3 auf, wobei das Gehäuse 2 auf den Bolzen 1 lagerichtig aufgedrückt wird, so dass die umlaufende Dichtung zwischen Bolzen 1 und Gehäuse 2 verpresst wird und dann die Metall-Laschen 4 mit dem metallischen Bolzen 1 verschweißt werden. Als Schweißtechniken können hier Laser- oder Widerstandsschweißungen verwendet werden.

Figur 3 zeigt eine weitere perspektivische Darstellung des Verbindungselements. Im Gehäuse 2 befindet sich eine Leiterplatte 9, auf der die Signalaufbereitungselektronik angeordnet ist. Hier sind lagerichtig Kontaktfedern 7 aufgelötet, so dass nach Montage diese Kontaktfedern 7 auf den Kontaktzonen 5 aufliegen. Die Signale vom Hallsensor werden dann über diese Kontakte der Leiterplatte 4 und einer eventuell vorhandenen Auswerteelektronik auf die Steckerpins im Stecker 2 übertragen. Im Gehäuse 2 ist auch die umlaufende Dichtung 6 zu sehen. Alternativ ist es möglich, dass die Leiterplatte 4 entfallen kann und die Kontakte 7 dann direkt im Gehäuse an den entsprechenden Stellen der Einlegeteile befestigt sind. Dies kann durch Löten oder Schweißen erreicht werden.

## Patentansprüche

1. Verbindungselement (41) mit einem Messelement (10) zur Erzeugung eines eine erste Kraft charakterisierenden Signals, wobei das Verbindungselement (41) als Sitzkraftsensor realisiert ist, wobei der Sitzkraftsensor für eine Befestigung am Fahrzeugsitz vorgesehen ist, **dadurch gekennzeichnet, dass** Signalabgabemittel (5, 7, 11, 12, 13) in einem Gehäuse (1, 2) des Verbindungselements (41) vorgesehen sind, die das Messelement (10) von einer zweiten Kraft, die auf die Signalabgabemittel wirkt, entkoppeln, dass die Signalabgabemittel eine Federkontaktierung zur Entkopplung aufweisen, dass das Gehäuse (1, 2) einen ersten Teil (1) mit dem Messelement (10), das in einer Hülse gelagert ist und mit wenigstens einer Kontaktfläche (5), die mit dem Messelement verbunden ist, sowie einem zweiten Teil (2), der zur Herstellung der Federkontaktierung konfiguriert ist, aufweist, wobei der zweite Teil (2) einen Stecker für elektrische Leitungen aufweist, dass der zweite Teil auf dem ersten Teil befestigt ist, wobei zwischen dem ersten und zweiten Teil eine Dichtung vorgesehen ist.

2. Verbindungselement nach Anspruch 1, **dadurch gekennzeichnet, dass** die Federkontaktierung auf der Kontaktfläche auf einer Leiterplatte, die im ersten Teil des Gehäuses gelagert ist, realisiert ist.

## Claims

1. Connecting element (41) having a measuring element (10) for generating a signal which is **characterized** as a first force, wherein the connecting element (41) is implemented as a seat force sensor, wherein the seat force sensor is provided for attachment to the vehicle seat, **characterized in that** signal-emitting means (5, 7, 11, 12, 13) are provided in a housing (1, 2) of the connecting element (41) and decouple the measuring element (10) from a second force which acts on the signal-emitting means, **in that** the signal-emiting means have a spring contact for the purpose of decoupling, **in that** the housing (1, 2) has a first part (1) with the measuring element (10) which is mounted in a sleeve, and has at least one contact face (5) which is connected to the measuring element, as well as a second part (2) which is configured to produce the spring contact, wherein the second part (2) has a plug for electric leads, and **in that** the second part is connected to the first part, with a seal being provided between the first and second parts.

2. Connecting element according to Claim 1, **characterized in that** the spring contact on the contact face is implemented on a printed circuit board which is mounted in the first part of the housing.

## Revendications

1. Elément de liaison (41) comportant un élément de mesure (10) pour générer un signal caractérisant une première force,
l'élément de liaison (41) étant un capteur de force d'assise,
le capteur de force d'assise étant prévu pour être fixé au siège du conducteur,
**caractérisé en ce que**
les moyens (5, 7, 11, 12, 13) générant le signal sont logés dans un boîtier (1, 2) de l'élément de liaison (41), pour découpler l'élément de mesure (10) d'une seconde force agissant sur les moyens générant le signal,
les moyens générant le signal comportant un contact par ressort pour le découplage,
le boîtier (1, 2) comprenant une première partie (1) avec un élément de mesure (10) logé dans un manchon et au moins une surface de contact (5) reliée à l'élément de mesure ainsi qu'une seconde partie (2) configurée pour réaliser le contact par ressort,
la seconde partie (2) ayant un connecteur pour les lignes électriques,
la seconde partie étant fixée sur la première partie, un joint étant prévu entre la première et la seconde partie.

2. Elément de liaison selon la revendication 1,
**caractérisé en ce que**
le contact par ressort est réalisé sur la surface de contact d'une plaque de circuit montée dans la première partie du boîtier.
